**Europäisches Patentamt**

**European Patent Office**

**Office européen des brevets**

(19)

(11) Publication number: **0 178 884**
**A2**

# (12) EUROPEAN PATENT APPLICATION

(21) Application number: **85307374.0**

(22) Date of filing: **14.10.85**

(51) Int. Cl.⁴: **B 41 J 3/04**

(30) Priority: **15.10.84 US 661029**
**16.10.84 US 661925**

(43) Date of publication of application:
**23.04.86 Bulletin 86/17**

(84) Designated Contracting States:
**BE CH DE FR GB IT LI LU NL**

(71) Applicant: **Exxon Research and Engineering Company**
**P.O.Box 390 180 Park Avenue**
**Florham Park New Jersey 07932(US)**

(72) Inventor: **DeYoung, Thomas William**
**Rt. 1 Box 289 Overhill Road**
**Stormville New York 12582(US)**

(74) Representative: **Mitchell, Alan et al,**
**ESSO Engineering (Europe) Ltd. Patents & Licences Apex**
**Tower High Street**
**New Malden Surrey KT3 4DJ(GB)**

(54) **Ink jet apparatus and method of operating the same.**

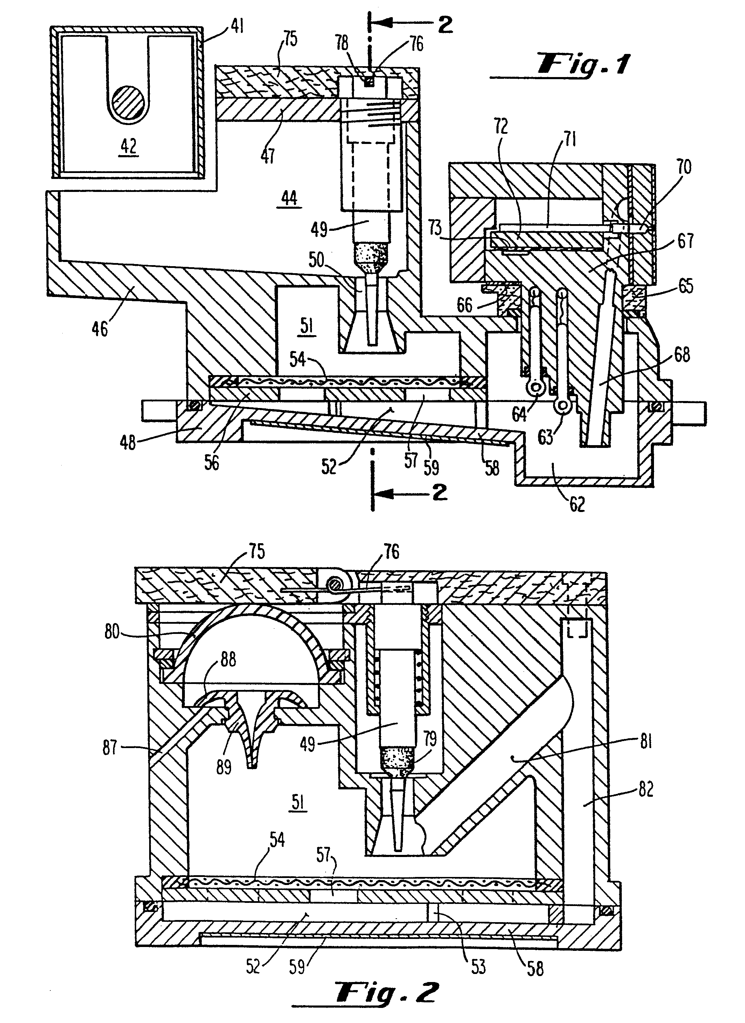

(57) Ink jet apparatus utilizing hot melt ink includes a pressure source (80,89) for repriming the system following non-use and freezing of the ink in the reservoir (61). The repriming operation may be carried out either manually or automatically, as long as permitted by the sensed level of the ink in the reservoir system (Figure 2).

_Fig. 2_

Croydon Printing Company Ltd.

EP 0 178 884 A2

INK JET APPARATUS AND METHOD OF OPERATING THE SAME

This invention relates to ink jet apparatus for ejecting droplets of ink, and more particularly, to ink jet apparatus utilizing hot melt ink.

The use of hot melt ink in ink jet systems, which ink is normally in a solid or frozen state but attains a liquid state or phase when its temperature is raised, has presented a number of advantages to ink jet apparatus. While the use of hot melt ink has presented advantages, it also creates an additional requirement for the design of the apparatus, including a special need for frequent repriming of the system. One of the characteristics of hot melt type ink is that it degenerates faster the longer it is maintained in its liquid phase, with the result that it is advantageous to permit cooling and freezing of the ink when the apparatus is not in use. However, a problem arises from the fact that hot melt ink contracts when it cools to a temperature below the melting point, which contraction of the ink results in depriming of the system. Thus, such hot melt ink apparatus has an increased need for an efficient priming/repriming system.

According to the invention from one aspect there is provided a method of operating an ink jet apparatus, said apparatus having an ink supply system for supplying hot melt type ink to be ejected in the form of ink droplets, comprising the steps of: containing said ink in said ink supply system; normally heating all of said
ink in said ink supply system when said apparatus is
in use to maintain said ink in its melted phase;
cooling said ink when said apparatus is not being used,
whereby said ink reverts to its frozen phase, resulting
in contraction of said ink and depriming of said apparatus; re-heating said frozen ink to its melted phase
when said apparatus is to be put in use again; and
repriming said apparatus, before it is put in use again,
to eject ink through said supply system and out of said
print head.

According to the invention from another aspect
there is provided ink jet apparatus for use with hot melt
ink, comprising a print head for ejection of ink droplets,
a reservoir for hot melt type ink for supply to said print
head, and a heater operable for maintaining ink in said
reservoir in its melted phase, said reservoir comprising
a housing with a normally open port,  closing means for
closing said port, and repriming means operable only when
said port is closed for providing air pressure into said
reservoir whereby said apparatus is preprimed following
re-heating of ink that had frozen, to convert said ink
back to its melted phase.

It will therefore be appreciated that preferred
embodiments of the invention are capable of providing
an ink jet repriming the system after depriming caused
by permitting the hot melt ink to cool to its solid
state while the apparatus is not in use.  It is also
possible to provide an efficient, easily operable, and
reliable priming system for use with hot melt ink apparatus or an efficient priming system and method for use
with hot melt ink jet apparatus with control means to
avoid depriming when the apparatus ink level is too
low.  The ink jet apparatus may be more to provide an efficient priming system and method for an ink jet apparatus utilizing hot melt ink, the apparatus having a movable ink jet head, and with the bulk of the priming system located separately from the moving structure so as to minimize the mass of such moving structure.

There is disclosed hereinbelow an ink jet apparatus utilizing hot melt ink, and a method of operating same, having a reservoir system for containing ink and a heating system for controlled heating of the ink to its melted phase when the apparatus is in use, and a priming system for applying priming pressure to the reservoir for repriming the system following non-use of the apparatus. Both manual and automatic modes of priming systems are disclosed, along with means for safeguarding against the priming operation when the ink level in the reservoir falls below a predetermined dangerous level.

The invention will be more fully understood from the following description given by way of example and with reference to the accompanying drawings wherein :-

Fig. 1 is a side sectional view of one embodiment of this invention, showing a combined reservoir and ink jet head.

Fig. 2 is a sectional view along lines 2-2 of Fig. 1, of the apparatus of Fig. 1.

Fig. 3 is a schematic diagram of another arrangement for the priming system.

Fig. 4 is a sectional view of a portion of the embodiment of Fig. 3, showing the connection of the stationary priming pump with the movable reservoir apparatus.

Fig. 5 is a flow diagram illustrating the steps of one method of performing this invention.

Referring first to Figure 1, in the upper left hand corner there is illustrated a pellet carrier 41 containing an ink pellet 42. The pellet is deposited, by means not shown, into an upper reservoir 44 which is formed by a sloping base 46 and a reservoir cover 47. The base 46 is contiguous with and in thermal connection with a lower reservoir base 48 which extends across the bottom of the apparatus and which at the right hand side of the figure defines a well or sump 62, as discussed further herein below. The base portion 46 and lower reservoir base 48 are integrally constructed of an efficient heat conductive material, suitably a metal such as aluminum, to enable efficient conduction of heat throughout the reservoir system. This enables melting of the pellet 42 after it has dropped onto the top surface of upper base 46, and also enables efficient and uniform heating of the melted ink that is maintained in the reservoir, including particularly the ink maintained in the well 62. Pellet 42 contains ink of the hot melt type, and the ink is maintained in the liquid phase at a predetermined
normal operating temperature by heater 59 which is
illustrated at the bottom of sloped section 58 of
reservoir base 48.

Referring to the right hand portion of the
reservoir as illustrated in Fig. 1, there is shown a
valve 49 which is in its normally open position, in
which position it provides a path through an opening 50
for flow of the melted ink down into a lower reservoir
area 51. Reservoir portion 51 is bounded on its bottom
by fine mesh screen filter 54, which removes unwanted
particulates from the ink. The ink filters through
screen 54 and passes through perforation holes 57 of
plate 56, from where it passes by gravity feed down the
tilted or sloped portion 58 of reservoir base 48 into
the sump 62. Baffles 53 are shown within the post-
filter portion of the reservoir 52, which baffles are
designed to minimize the effect of sloshing of the ink
in the reservoir which may occur due to movement of the
apparatus. Under normal operating conditions, the ink
supply is such that the ink level does not rise appreciably above filter 54, and thus the ink can be considered to be appreciably limited to residing in the
post-filter portion 52 and the sump portion 62. Since
valve 49 is normally in its open position, atmospheric
pressure is applied to the liquid ink so that the ink
in well 62 is under a pressure head.

A pair of level detectors 63, 64 are shown
positioned to determine the level of the ink in the
area of sump 62. The detectors are connected, by means
not shown, to indicators or automatic means for signalling the ink level, so that additional ink can be
supplied to the reservoir 44 when needed by dropping
another pellet 42 into it. Pressure on the ink within sump 62, as well as capillary action, draws ink through feed tube or passage 68, which communicates through a manifold to the input end of each orifice chamber 70, which chamber terminates in a standard orifice from which ink drops are expelled. As illustrated, a longitudinal transducer, suitably a piezo-electric type transducer 71 is provided. The overall apparatus comprises, at the ink jet head, an array of transducer-chamber combinations, each terminating in an orifice from which ink droplets are ejected, and supplied with ink through common passage 68 and a manifold in communication with each chamber. The transducers 71 are under the control of electronic drive circuitry illustrated as mounted on printed circuit 72, which printed circuit is separated by insulator 73 from the heat conductive print head block 67.

Still referring to Fig. 1, a second heater 66 is provided in thermal contact with head element 67, to maintain the temperature of the ink passing up through feed tube 68 and into the chambers 70. This heater is normally kept in an operating state at all times, even when the apparatus is not in use, so as to always maintain ink in a liquid phase throughout the ink jet head and the length of feed tube 68. To render the operation of heater 66 efficient and independent of the heater 59, ink jet head element 67 is thermally insulated from the main reservoir housing portions 46, 48, 58 by insulator element 65.

Referring to Fig. 2, there is shown a cross-sectional view taken along the lines 2-2 of Fig. 1, which illustrates additional structure utilized in priming and repriming the fluid system, e.g., following cooling and solidification of the melted ink. Hinged door 75 can be opened and has connected thereto a spring 76 which, when rotated clockwise due to opening of the door, presses valve 49 into its downward position. This causes a rubber tip portion 79 of the valve element to close the opening 50, thereby sealing off upper reservoir 44 from the outside and blocking fluid flow from reservoir portion 44 down into the lower reservoir portions 51, 52 and 62. As illustrated to the left of valve element 49, a hemispherical bulb 80 made of a flexible rubber-like material is positioned below door 75, such that it is easily accessible to an operator when door 75 is opened. Bulb 80 defines an inner space which communicates to a one-way valve 89 positioned directly below the bulb. When and only when door 75 is in its opened position, such that valve 49 is in its closed position, the operator can squeeze bulb 80 and expell air through the one-way valve 89, thus generating an air pressure within reservoir 44 for priming purposes. This priming pressure, which is suitably of the order of 2 - 3 psi, cannot escape through opening 50, but does find a pathway through filter 54 to the ink maintained in the lower reservoir portion 52 and the sump 62. Additionally, the priming pressure has a pathway through bypass channel 81 which couples into vertical channel 82 leading down into the area above sump 62. Thus, even if filter 54 is relatively clogged such that it presents a high impedence to the priming pressure, the priming system is rendered efficient through the bypass channels. The air pressure thus generated pushes ink up through feed 68 to purge the ink jet chamber 70 and the corresponding orifices. When the priming operation is terminated, the relative vacuum within the space defined by bulb 80 draws air through vent 87, forcing up the peripheral portion 88 of valve 89, to restore substantial atmospheric air pressure within the space of the bulb.

In operation of the embodiment of Figs. 1 and 2, the operator must take care not to prime excessively and exhaust ink from the system to the point of forcing air up into the ink jet head. Such condition of pushing air into the ink jet head can have very adverse consequences, and indeed can result in complete loss of operation of the apparatus. The operator can avoid this by monitoring the visual output from level sensor 63, and terminating the priming operation as soon as a low level indication is provided. Level sensor 63 is suitably set to provide a low level indication with a margin of safety so that the priming or repriming operation is terminated safely before air is permitted to pass up through feed tube 68.

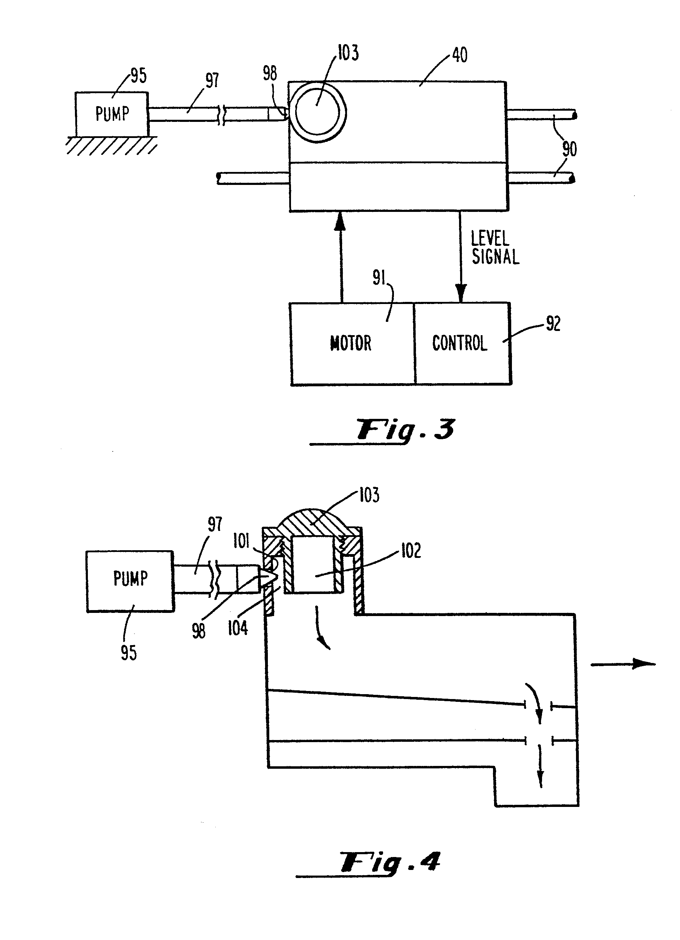

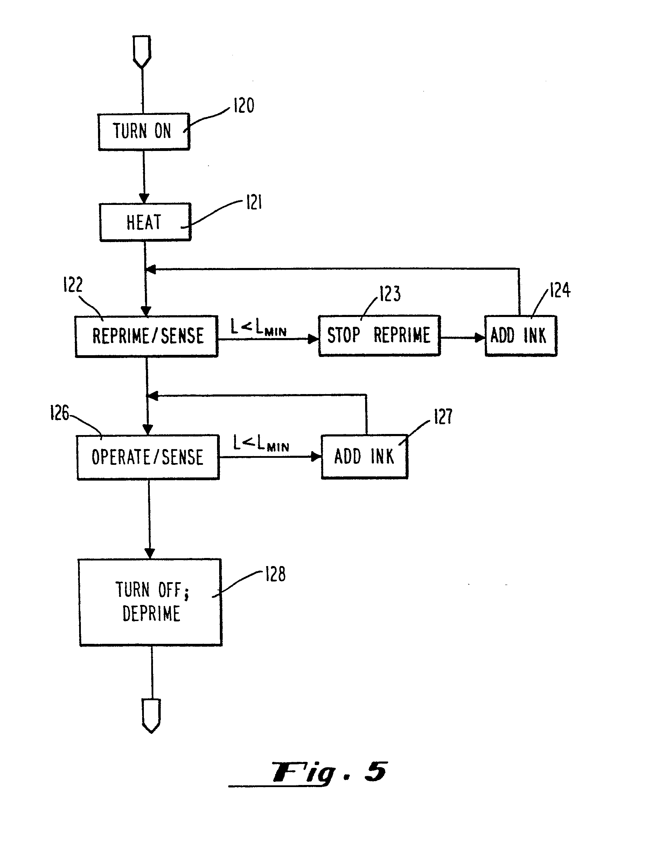

Referring now to Figs. 3 and 4, there is illustrated diagramatically another preferred embodiment of this invention, wherein the repriming operation is effected automatically. The print head and reservoir combination are illustrated at 40, mounted on rails 90. In a typical application, the apparatus 40 is transported by a motor, such as a stepper motor as illustrated at 91. Ink pellets are inserted through a removable cap or lid 103 and which contains a cartridge 102 which drops a pellet into the reservoir when the cap 103 is screwed into place. A pump 95 is mounted on the printing apparatus but off of the rails, such that it is stationary relative to the movable ink jet apparatus 40. This has the substantial advantage of taking the mass of the pump off of the carriage. Pump 95 has a connector 97 which terminates in a conical tip or nipple 98. Tip 98 is sized to fit into an otherwise normally open port 101 in the side of the housing of the apparatus 40. The tapered tip 98 is positioned such that when motor 91 carries apparatus 40 toward the pump, the tapered tip registers with the seals into port 101 to provide an effective air-tight seal. For a priming or repriming operation, motor 91 carries apparatus 40 to the position where the tip 98 is sealingly connected to the apparatus 40, connector 97 being spring mounted to hold tip 98 safely into the port 101. It is noted that in the absence of the connection, port 101 and passage 104 provide an open vent through which atmospheric pressure is maintained above the ink in the reservoir.

In operation of the automatic apparatus of Figs. 3 and 4, priming is commenced by the operator controlling the motor to carry the apparatus 40 into connecting position with supply tip 98, and pump 95 then automatically provides the desired 2 - 3 psi of priming pressure. While the priming operation goes on, the level signal, as detected by level detector 63 illustrated in Fig. 1, is continuously monitored by control circuit 92. The priming operation is suitably timed to continue for a sufficient time to pass a predetermined amount of ink through the system and out of the jets. However, if at any time during this operation the level signal indicates that the ink level has dropped to the predetermined level, control circuit 92 causes motor 91 to immediately carry apparatus 40 away from its connected position, thereby terminating the priming operation while a safe amount of the ink is still maintained in the reservoir. The operator then must replace the ink supply before again carrying out a priming operation.

In operation of any of the desired embodiments of this invention, it is desirable to turn off the primary heater 59 when the ink jet apparatus is not being used. A characteristic of the hot melt type ink is that it degenerates more quickly the longer it is maintained in its molten state, making it practical to permit the bulk of the ink in the reservoir to freeze when the apparatus is not being used. Thus, heater 59 is turned off during non-use. Additionally, it will occasionally happen that the print head heater 66 is also turned off, such as when power is lost. All of the ink in the reservoir then cools below the freezing temperature, with resultant contraction and depriming of the system. When it is desired to restart operation of the apparatus, it is necessary to reprime the system, due to the fact that the cooling and freezing of the ink in the reservoir has a depriming effect.

Referring now to Fig. 5, the flow diagram illustrates the steps to carry out the operation of the apparatus disclosed herein. The apparatus is turned on as illustrated at 120, followed by the heating of the ink at 121 to convert all of the ink to its liquid phase. Since the ink had been in its frozen or solid phase while the apparatus was unused, the system is deprimed and needs to be reprimed. The repriming step is carried out at block 122, and at the same time the ink level is continuously sensed, as by sensor 63 illustrated in Fig. 1. If at any time during the repriming operation the level L of the ink is sensed to be less than the minimum required level Lmin, then the repriming operation is terminated as illustrated at block 123. The operator then adds ink as at 124, following which the repriming operation recommences. When the repriming operation is completed, the apparatus can be operated as illustrated at 126. During the operation the ink level is continually sensed, and if at any time the level L is sensed to be below Lmin, then ink is added as shown at block 127.

At the end of operation, the apparatus is turned off, as illustrated at 128. When both heaters 59 and 66 are turned off, the ink reverts to its solid or frozen state, with consequent depriming of the system.

0178884

-12-

CLAIMS:

1. A method of operating an ink jet apparatus, said apparatus having an ink supply system for supplying hot melt type ink to be ejected in the form of ink droplets, comprising the steps of:

containing said ink in said ink supply system;

normally heating all of said ink in said ink supply system when said apparatus is in use to maintain said ink in its melted phase;

cooling said ink when said apparatus is not being used, whereby said ink reverts to its frozen phase, resulting in contraction of said ink and depriming of said apparatus;

re-heating said frozen ink to its melted phase when said apparatus is to be put in use again; and

repriming said apparatus, before it is put in use again, to eject ink through said supply system and out of said print head.

2. A method according to claim 1, wherein said repriming step includes supplying a pressure of at least about two psi to said reservoir.

3. A method according to claim 2, further comprising venting said reservoir through a port when said apparatus is in use, and supplying said pressure through said port during said repriming.

4. A method according to claim 2 or 3, wherein said repriming comprises manually generating said pressure.

5. A method according to claim 2 or 3, wherein said repriming comprises automatically connecting a pressure source to said system to provide said pressure.

6. A method according to claim 5, wherein said automatic connecting comprises moving said reservoir system and print head to a source of pressure.

7. A method according to any preceding claim, comprising monitoring the level of ink in said reservoir during said repriming, and terminating repriming when said level is sensed to be below a predetermined level.

8. A method according to claim 7, wherein said terminating comprises automatically terminating said repriming.

9. An ink jet apparatus for use with hot melt ink, comprising a print head for ejection of ink droplets, a reservoir (51) for hot melt type ink for supply to said print head, and a heater (50) operable for maintaining ink in said reservoir in its melted phase, said reservoir comprising a housing with a normally open port (50), closing means (49) for closing said port, and repriming means (80, 89) operable only when said port (50) is closed for providing air pressure into said reservoir (51) whereby said apparatus is preprimed following re-heating of ink that had frozen, to convert said ink back to its melted phase.

10. An ink jet apparatus according to claim 9, comprising ink feed means (46) for feeding ink in its melted phase to said reservoir (51) through said port (50).

11. An ink jet apparatus according to claim 8 or 9 wherein said reservoir is provided with a sump (62) for collecting ink and feed means (68) for transferring ink in the melted phase from said sump to said print head, there being a filter (54) between said port (50) and said sump (62), and bypass means (81, 82) providing an air flow bypass from above said filter to said sump, whereby pressure from said repriming means (80, 89) can bypass said filter.

12. An ink jet apparatus according to claim 9, comprising movable carriage means (40) for controlled moving of said reservoir and print head, a stationary mounting means for mounting said repriming means (95, 97) separate from said carriage, said repriming means (95, 97) comprising connection means (97) for connecting to said reservoir in a sealed relationship when said carriage means is positioned proximate to said repriming means.

13. An ink jet apparatus according to claim 12, comprising ink level sensing means for sensing the level of ink in said reservoir, and automatic control means (92) responsive to said sensed level for disconnecting said reservoir and said repriming means (95, 97) when said ink level is at or below a predetermined level.

0178884

**Fig.1**

**Fig.2**

_**Fig.3**_

_**Fig.4**_

_Fig . 5_